Europäisches Patentamt

European Patent Office

Office européen des brevets

(19)

(11) Veröffentlichungsnummer: **0 238 648**
**B1**

(12) **EUROPÄISCHE PATENTSCHRIFT**

(45) Veröffentlichungstag der Patentschrift: **16.05.90**

(51) Int. Cl.⁵: **B 28 D 1/04**

(21) Anmeldenummer: **86906309.9**

(22) Anmeldetag: **15.10.86**

(86) Internationale Anmeldenummer:
**PCT/EP86/00589**

(87) Internationale Veröffentlichungsnummer:
**WO 87/02302 23.04.87 Gazette 87/09**

(54) **VERFAHREN UND VORRICHTUNG ZUR HERSTELLUNG VON TIEFEN SCHNITTEN IN BETON ODER DERGL.**

(30) Priorität: **18.10.85 DE 8529668 u**
**19.06.86 DE 3620553**

(43) Veröffentlichungstag der Anmeldung:
**30.09.87 Patentblatt 87/40**

(45) Bekanntmachung des Hinweises auf die
Patenterteilung:
**16.05.90 Patentblatt 90/20**

(84) Benannte Vertragsstaaten:
**CH DE FR GB LI SE**

(56) Entgegenhaltungen:
**FR-A- 439 160**
**FR-A- 750 746**
**FR-A-1 181 703**
**FR-A-1 375 448**
**FR-E- 13 301**
**US-A-3 293 963**

(73) Patentinhaber: **LONGYEAR DEUTSCHLAND
GMBH
Grafftring 1
D-3100 Celle (DE)**

(72) Erfinder: **SCHULDEI, Paul
Kirschenweg 13
D-3100 Celle (DE)**

(74) Vertreter: **Einsel, Robert, Dipl.-Ing.
Petersburgstrasse 28
D-3100 Celle (DE)**

Courier Press, Leamington Spa, England.

EP 0 238 648 B1

**Beschreibung**

Die Erfindung betrifft ein Verfahren und eine Vorrichtung zur Herstellung von tiefen Schnitten in Beton oder dergleichen.

Es ist bekannt (GB—A—254 282), mit Hilfe von Kreissägeblättern, Stahlbeton, Beton oder Mauerwerk zu schneiden. Zu diesem Zweck sind die Kreissägeblätter mit Diamantsegmenten bestückt. Solche Schnitte sind jedoch in ihrer Tiefe dadurch begrenzt, daß nur die Hälfte des Sägeblattdurchmessers genutzt werden kann. Für tiefere Schnitte ist ein Perforationsverfahren bekannt, bei dem Bohrungen Loch an Loch in Reihe hergestellt werden, die zusammen Ausschnitte ergeben. Solche Verfahren sind jedoch relativ kompliziert.

Der Erfindung liegt die Aufgabe zugrunde, Kreissägeblätter für die Herstellung tiefer Schnitte in Beton oder dergl. verwendbar zu machen.

Zur näheren Erläuterung der Erfindung werden im folgenden zwei Ausführungsbeispiele anhand der Zeichnungen beschrieben. Diese zeigen in

Fig. 1 die Seitenansicht eines als Führungssäule dienenden Bohrständers mit einer Halterung für Antriebs- und Führungskörper

Fig. 2 eine Draufsicht auf die Anordnung nach Fig. 1

Fig. 3 eine perspektivische Darstellung des Antriebs- und Führungskörpers nach Fig. 1 und Fig. 2

Fig. 4 ein Ausführungsbeispiel mit einer beidseitig ortsfest gelagerten Traverse.

Diese Aufgabe wird durch die im Hauptanspruch gekennzeichnete Erfindung gelöst. Weiterbildungen der Erfindung sind in den Unteransprüchen beschrieben.

Im Prinzip wird zunächst neben dem geplanten Schnittverlauf des Kreissägeblattes ein Führungsloch hergestellt. In dieses Führungsloch wird dann ein mit dem Antriebskörper des Kreissägeblattes verbundener Führungskörper eingeführt wird. Beim tieferen Eindringen des rotierenden Kreissägeblattes dringt auch der Antriebskörper ein und wird darin soweit abgesenkt, wie es die Tiefe des gewünschten Schnittes erfordert. Führungskörper und Antriebskörper sind an einer ortsfest gelagerten Führungssäule in Eindringrichtung des Sägeblatts verschiebbar gelagert. Die Führungssäule ist verwindungssteif ausgebildet, um eine Beschädigung des Sägeblattes beim Betrieb zu verhindern.

Es ist zwar bekannt (FR—E—13301), zum Gesteinssägen in dem Gestein eine Führungsbohrung herzustellen und in diese Bohrung Umlenkrollen für einen Sägedraht einzuführen. Hinweise auf Kreissägeblätter enthält diese Schrift aber nicht.

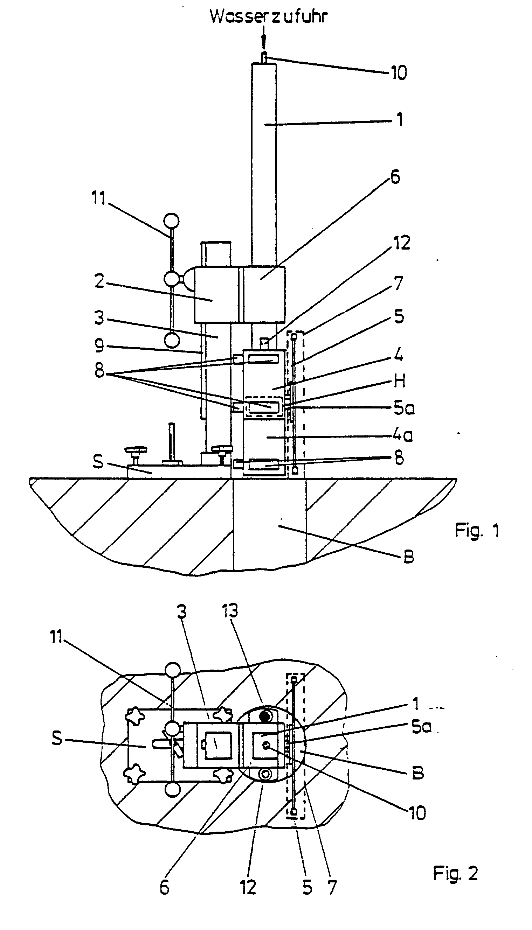

In Fig. 1 ist eine Vorrichtung zur Herstellung tiefer Schnitte mit einem Kreissägeblatt dargestellt. Eine Säule 1 in Form einer Vierkantsäule ist einerseits mit einer Vorschubeinheit 2 zu einer verstellbaren Einheit verbunden, die längs eines Bohrständers 3 verschiebbar ist. Mit der Vierkantsäule 1 ist außerdem ein Sägekörper 4 verbunden, der sowohl die Antriebseinrichtung für ein Sägeblatt 5 als auch Führungskörper 4a für die Führung der Sägeanordnung in einer Führungsbohrung B enthält. Der Führungskörper 4a ist abnehmbar an der Einheit 4 befestigt, weil er im wesentlichen nur in der ersten Phase des Schnittes benötigt wird. Insbesondere bei sehr tiefen Schnitten kann eine um den Radius des Sägeblattes 5 weniger tiefe Führungsbohrung B verwendet werden. Für solche Schnitte wird dann der Führungskörper 4a entfernt. Am Sägekörper 4 sind Führungsstücke 8 befestigt, die eine Dreipunktanlage des Sägekörpers 4 an den Wandungen der Führungsbohrung B bewirken. Die Vierkantsäule 1 ist in einer Aufnahme 6 lösbar befestigt. Dadurch ist es möglich, eine der Schnittiefe entsprechend lange Vierkantsäule 1 und einen relativ kurzen Bohrständer zu verwenden. Nach Erreichen einer der Länge des Bohrständers 3 entsprechenden Schnittiefe wird die Vierkantsäule 1 in der Aufnahme 6 gelöst, die Vorschubeinheit 2 wieder in ihre höchste Position gebracht, die Säule 1 erneut befestigt und das Schneidverfahren fortgesetzt usw. Eine Zahnstange 9 am Bohrständer 3 sorgt für eine genaue und feine Verstellung der Vorschubeinheit 2. Ein Blattschutz 7 schützt sowohl den Bedienenden gegen Verletzungen als auch das Sägeblatt gegen Beschädigungen von außen. Schließlich kann der Blattschutz 7 auch noch zum Auffangen des Kühl- und/oder Spülwassers ausgebildet und verwendet werden. Wie in Fig. 1 angedeutet, wird nämlich das Kühlwasser durch eine Leitung 10 am oberen Ende der Vierkantsäule 1 zugeführt und im Bereich des Sägeblattes beidseitig gegen das Sägeblatt 5 gesprüht. Es tritt dann aus dem gesägten Schlitz wieder aus und wird vom Blattschutz 7 aufgefangen. Es kann von dort aus wieder in den Kreislauf eingeführt werden oder gezielt abgeleitet werden. Der Bohrständer 3 wird ortsfest gelagert, beispielsweise durch Befestigung am Untergrund mittels Dübel und Schrauben. Der Vorschub der Einheit 2 kann mittels eines Hebels 11 von Hand oder motorisch erfolgen.

Fig. 2 zeigt eine Draufsicht auf die soweit beschriebene Anordnung. Deutlich sichtbar ist die Führungsbohrung B mit der Sägeeinheit 4 und der Vierkantsäule 1 in der Aufnahme 6 und der Wasserzufuhr 10. Auch der vierkantige Bohrständer 3 mit dem Hebel 11 ist deutlich erkennbar. Wegen der erforderlichen Leistung von beispielsweise 15 kW wird als Antrieb ein Hydraulikmotor H bevorzugt angewendet, der in den Sägekörper 4 eingebaut ist. Solche Hydraulikmotoren sind handels üblich. Am Sägekörper 4 sind Zuführung 12 und Abfluß 13 der Hydraulikflüssigkeit für den Motor H sichtbar. Durch die Verwendung vierkantiger Säulen für Führung 1 und Bohrständer 3 wird eine optimale Verwindungssicherheit erreicht. Das bedeutet, daß selbst tiefe Schnitte mit nur einem Sägeblatt durchgeführt werden können. Je zwei Führungsstücke 8 aus z.B. Kunststoff für die seitliche Führung in der Führungsbohrung B sind sichtbar. Das jeweils dritte Führungsstück 8 ist unter der Aufnahme 6 verborgen. Dieses in Fig. 2 verborgene Führungsstück 8 ist aber in Fig. 1 sichtbar.

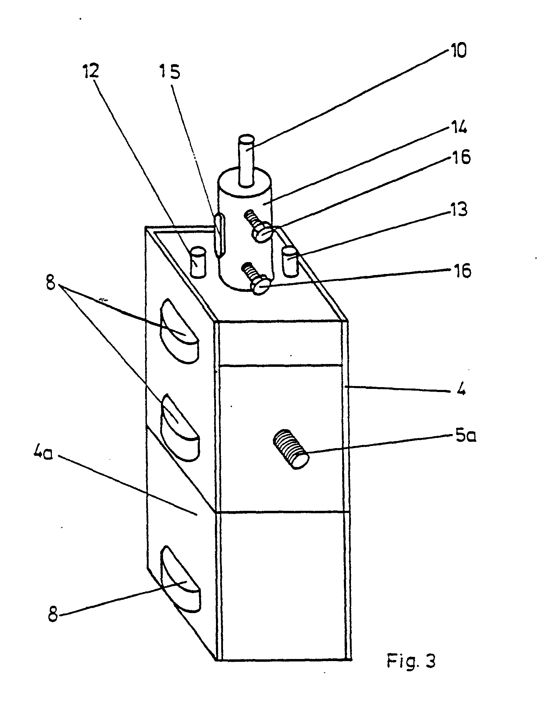

Fig. 3 zeigt den Sägekörper 4 in perspektivischer Darstellung. Zusätzlich zu den Fig. 1 und 2 ist die Verbindungsstelle von Vierkantsäule 1 und Sägekörper 4 dargestellt. Ein zylinderförmiger Ansatz 14 mit einer Feder 15 am Sägekörper 4 dringt in eine entsprechende Öffnung an der Stirnseite der Säule 1 ein und wird dort durch eine Nut- und Federverbindung mit der Feder 15 verwindungssteif gehalten. Schrauben 16 sorgen für feste Verbindung.

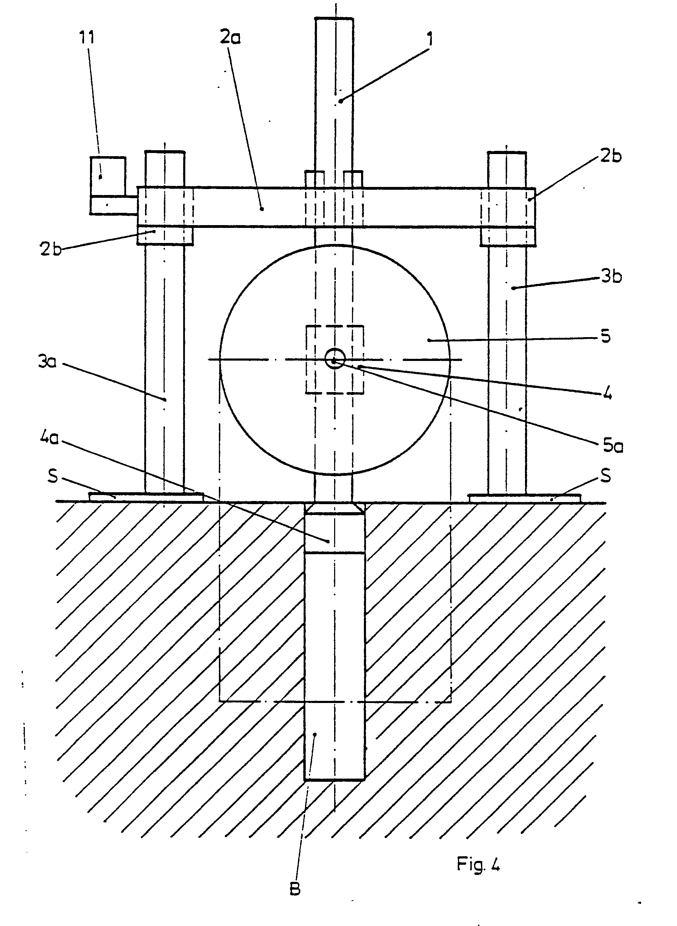

Fig. 4 zeigt eine Schneidvorrichtung mit zwei Bohrständern 3a, 3b und einer Quertraverse 2a, an der die Säule 1 gegen Torsion gesichert befestigt ist. Die Säule 1 ist mit einem Sägekörper 4 versehen, der zugleich als Antriebsgehäuses für den Antrieb des Sägeblattes 5 über die Antriebswelle 5a dient. Am unteren Ende des Sägekörpers 4 ist eine Führung mit dem Führungskörper 4a lösbar befestigt, der wie der Sägekörper 4 an die Form der Führungsbohrung B angepaßt ist und seitliche Verschiebungen des Sägeblattes 5 bei Schnittbeginn vermeiden soll. Führungskörper 4a und Sägekörper 4 sind an die Form der Bohrung B so angepaßt, daß zunächst der Führungskörper 4a und—nach Erreichen einer entsprechenden Schnittiefe—der Sägekörper 4 in der Bohrung B gegen seitliche Verschiebungen sicher geführt ist. Die Traverse 2a ist mittels zweier Buchsen 2b so auf den beiden Bohrständern 3a, 3b gelagert und geführt, daß sie auf- und abgefahren werden kann. Zum Auf- und Abfahren dient eine in Fig. 4 nicht dargestellte Vorschubeinrichtung 2 gemäß Fig. 1. Die Vorschubeinrichtung 2 kann auf eine der Säulen 3a, 3b beschränkt sein. Es kann aber auch vorteilhaft sein, eine Parallelführung zur jeweils anderen Säule 3a, 3b vorzusehen. Diese Einrichtung 2 kann üblichen Einrichtungen entsprechen. Mit dem Auf- und Abfahren der Traverse 2a mittels der Vorschubeinrichtung 2 wird auch die Säule 1 und damit der Sägekörper 4 mit dem Kreissägeblatt 5 auf- und abbewegt. Der Führungskörper 4a kann wie in Fig. 1 mit dem Sägekörper 4 lösbar zu einer Einheit zusammengebaut sein. Er kann mit dem Sägekörper 4 aber auch gemäß Fig. 4 durch eine Säule 4b verbunden sein, die gleich oder ähnlich der Säule 1 ausgebildet ist. Wesentlich ist nur, daß der Führungskörper 4a in die Führungsbohrung B eintritt, bevor das Sägeblatt 5 durch den Schneidvorgang aus der gewünschten Lage abweichen kann. Die größte Sicherheit ist gegeben, wenn der Führungskörper bereits vor Schneidbeginn in die Führungsbohrung eintritt.

Mit den in den Fig. 1—4 dargestellten Schneideinrichtungen können tiefe Schnitte und tiefe oder sogar durchgehende rechteckige Löcher oder Aussparungen in Beton, Stahlbeton, Mauerwerk oder dergl. mit Kreissägeblättern hergestellt werden. Ein Verfahren zur Herstellung solcher Schnitte wird im folgenden beschrieben:

Nach Festlegung der Lage der Schnitte wird neben den späteren Schnitt eine Führungsbohrung B hergestellt, deren Lage und Durchmesser dem Aufbau des Schneidgerätes angepaßt ist. Die Lage der Bohrung B muß dem Abstand des Kreissägeblattes 5 vom Sägekörper 4 entsprechen. Der Durchmesser der Bohrung B ist so gewählt, daß Führungskörper 4a und Sägekörper 4 darin geführt auf- und abgefahren werden können und auch die Antriebswelle 5a ungehindert in diese Bohrung eintreten kann. Der Bohrständer 3 der Schneideinrichtung wird vor oder nach der Herstellung der Führungsbohrung B so montiert, daß er fest mit dem Boden verbunden ist, beispielsweise durch Schrauben, die durch den Sockel S des Bohrständers in Dübel im Boden eingreifen. Die Führungsbohrung B kann durch ein in den Bohrständer 3 eingesetztes Bohrgerät hergestellt werden. Dadurch wird erreicht, daß die Führungsbohrung und die Fahrbewegung des Kreissägeblattes gleiche Richtung haben.

Das Sägeblatt 5 wird am Sägekörper 4 montiert und dieses so justiert, daß das Sägeblatt 5 den erwünschten Schnitt durchführen kann. Das Justieren kann durch genaue Festlegung der Montagestelle des Bohrständers oder durch Verschiebung des Bohrständers 3 relativ zu seiner Halterung geschehen. Der Sägeschnittprozeß beginnt damit, daß der Sägekörper 4 mit dem Führungskörper 4a und dem rotierenden Sägeblatt 5 in Richtung auf die Führungsbohrung und damit in Richtung auf den Schnitt abgesenkt wird. Der Bohrständer 3 und die Säule 1 stabilisieren bereits die so abgesenkte Anordnung. Durch die Verwendung von Vierkantsäulen ist auch im Betrieb weitgehend für Verwindungssteifheit gesorgt. Sobald oder bevor das Sägeblatt schneidet und starke Kräfte auf den Sägekörper 4 ausgeübt werden, tritt der Führungskörper 4a in die Führungs-Bohrung ein und stabilisiert die Anordnung gegen die auftretenden Kräfte und verhindert eine Beschädigung des Sägeblattes 5 infolge von evtl Winkeländerungen.

Mit der Absenkung des Sägekörpers 4 schneidet das Sägeblatt 5 immer tiefer ein und bei Erreichen einer dem Radius des Sägeblatts entsprechenden Schnittiefe taucht auch der Sägekörper 4 mit der Welle 5a in die Führungsbohrung B ein. Bei Erreichen dieser Position kann der Führungskörper 4a vom Sägekörper 4 getrennt werden. Auf diese Weise werden Schnitt Tiefen erreicht, die über den Radius des Sägeblatts hinausreichen. Dabei spielt es für den Ablauf des Vorgangs keine Rolle, ob es sich um eine Durchgangs- oder um Sackbohrungen, um rechteckige oder winkelförmig ausgebildete Aussparungen handelt. Die Vorschubeinrichtung 2 ermöglicht Schnitte bis zu Tiefen, die über die Höhe des Bohrständers 3 hinausgehen. Zu diesem Zweck wird nach Erreichen einer der Höhe des Bohrständers 3 entsprechenden Tiefe die Befestigung der Säule 1 in der Aufnahme 6 gelöst, diese Aufnahme wieder in die obere Position verstellt und der Schneidvorgang nach erneuter Befestigung der Säule 1 in der Ausnahme fortgesetzt. Es kann sinnvoll sein, den Schnittverlauf nicht mit einem einzigen Sägeblatt der Größe des erwünschten Schnittes durchzuführen. Der erste Schnitt kann mit einem Durchmesser des Sägeblattes 5 von etwa 450 mm durchgeführt werden. Wird eine Schnittlänge über dieses Maß hinaus benötigt, wird der Schnitt mit einem oder mit mehreren größeren mit steigendem Durchmesser wiederholt. Dabei wird der erste Schnitt mit einer Schnittbereite von etwa 4,5 bis 5,5 mm durchgeführt. Weitere Schnitte können dann mit geringeren Schnittbreiten (Diamantsegmentbreiten) durgeführt werden. Dadurch wird die Reibung des Sägeblatts an der Wand des bereits vorhandenen Schnittes vermieden oder verringert.

Wenn längere Schnitte durchgeführt werden sollen, als es mit Kreissägeblättern üblicher Durchmesser möglich ist, werden vorzugsweise solche Schnitte seriell durchgeführt. Der Bohrständer wird dabei in Schnittrichtung versetzt erneut fest verankert und der Schnitt in der vorstehend beschriebenen Weise vorgenommen. Sägeblattdurchmesser von 1000 bis 2000 stellen zur Zeit eine obere Grenze bei wirtschaftlicher Betrachtungsweise dar. Längere Schnitte werden also durch wiederholte Aneinanderreihung von Einzelschnitten mit Absenkung des Sägeblatts für jeden einzelnen Schnitt bewirkt. Es ist auch möglich, den Bohrständer 3 statt wiederholt abzubauen und erneut zu justieren, auf parallel zu den Schnitten verlaufenden Profilschienen zu verankern, die selbst am Boden befestigt werden. Mit solchen Schienen ist es möglich, die Justierarbeiten bei der erneuten Befestigung des Bohrständers zu vereinfachen.

Ein wesentlicher Unterschied des neuen Verfahrens zur Herstellung von tiefen Schnitten gegenüber den vorbekannten Schneidverfahren mit Kreissägeblättern für geringe Schnitt-Tiefen besteht darin, statt eines dem Schnitt kontinuierlich parallel zur Materialoberfläche entlang fahrenden Schneidgerätes eine stufenweise Fortbewegung entlang der Oberfläche mit einzelnen stationären Tiefschnitten in Richtung auf das Material aneinanderzureihen. Gegenüber den für die Herstellung tiefer Schnitte bekannten Verfahren der Aneinanderreihung von Einzelbohrungen ergibt sich der Vorteil gerader und gleichmäßiger Schnitte. Jedem Schnitt wird eine Führungsbohrung zugeordnet. Bei einer Vielzahl von Schnitten wird daher jedem Einzelschnitt eine dieser Führungsbohrungen zugeordnet. Bei vorab hergestellten Führungsbohrungen können die Tiefenschnitte in beliebigen Raumebenen ausgeführt werden. Bei tieferen Schnitten, insbesondere bei mehreren aufeinanderfolgenden Schnitten zur Erzielung von längeren Schnitten (als es durch ein Sägeblatt erzielt werden kann), ist es zweckmäßig, die Führungsbohrungen B unter Berücksichtigung der Sägeblattdurchmesser in solchen Abständen voneinander anzuordnen, daß das Sägeblatt des Folgeschnittes in den jeweils bereits vorhanden Vorschlitz eingreift. Die Schnitte überlappen sich also. Dadurch trägt der Schlitz des Vorschnitts in Verbindung mit dem rotierenden Sägeblatt bereits zur Führung des Sägekörpers 4 bei. In diesem Fall kann das Führungsstück 4a für die Folgeschnitte unter Umständen vom Sägekörper 4 abgetrennt werden, weil es nicht mehr notwendig ist. Wenn die Führung durch den Schlitz des Vorschnitts bereits wirksam ist, bevor der Sägekörper in die Führungsbohrung eintaucht, kann der Führungskörper 4a schon nach dem ersten Schnitt abgenommen werden. Das ist z.B. der Fall, wenn ein kleines Sägeblatt für den ersten Schnitt durch ein größeres Sägeblatt, für den zweiten Schnitt ersetzt wird.

Die Führungsbohrung kann so bemessen sein, daß seitliche Bewegungen des Sägekörpers 4 in der Führungsbohrungen weitgehend vermieden werden, die Wandungen also Gleitkontakt haben. Es ist aber auch möglich, die Bohrung so groß zu bemessen, daß der Sägekörper praktisch berührungslos geführt wird. Beim Schneiden in Stahlbeton kann die Führungsbohrung vom geplanten Verlauf abweichen und dadurch eine Klemmung von Führungsstück 4a oder Sägekörper 4 verursachen. Für solche Fälle ist die Verwendung von Kugellagern vorteilhaft.

**Patentansprüche**

1. Verfahren zur Herstellung von tiefen Schnitten in Stahlbeton, Beton und Mauerwerk oder dergl., bei dem für die Schneidorgane eine Führungsbohrung hergestellt wird, dadurch gekennzeichnet, daß ein Schneidgerät mit einem Kreissägeblatt (5) verwendet wird, daß die Führungsbohrung (B) vor dem Schneidvorgang unmittelbar neben dem auszuführenden Schnitt eingebracht wird, in die der das Sägeblatt seitlich tragende und antreibende Sägekörper (4) bei fortschreitendem Schnitt versenkt werden kann.

2. Verfahren nach Anspruch 1, dadurch gekennzeichnet, daß die Führungsbohrung (B) mit einem solchen Durchmesser versehen wird, daß der Sägekörper (4) in der Bohrung (B) gleitend oder mit nur geringer Reibung bewegbar ist.

3. Verfahren nach Anspruch 1 oder 2, dadurch gekennzeichnet, daß vor dem Sägekörper (4) beim Beginn des Schneidens ein mit dem Sägekörper (4) verbindbarer Führungskörper (4a) in die Bohrung (B) eingeführt wird.

4. Verfahren nach einem oder mehreren der Ansprüche 1 bis 3, dadurch gekennzeichnet, daß mit einem Sägeblatt geringeren Durchmessers ein Vorschnitt durch geführt wird und anschließend mit mindestens einem weiteren Sägeblatt ein Nachschnitt durchgeführt wird.

5. Verfahren nach Anspruch 4, dadurch gekennzeichnet, daß weitere Schnitte ohne Führung in der Führungsbohrung durch zusätzliche Führungsstücke (4a) durchgeführt werden.

6. Verfahren nach einem der Ansprüche 1 bis 5, dadurch gekennzeichnet, daß zur Erzielung von tiefen Schnitten mit einer den Durchmesser der Sägeblätter (5) übersteigenden Länge mehrere Bohrungen nebeneinander mit solchen Abständen hergestellt werden, daß die von den Bohrungen (B) aus hergestellten Schnitte sich zu einem langen Schnitt ergänzen.

7. Verfahren nach Anspruch 6, dadurch gekennzeichnet, daß die Bohrungen (B) in einem solchen Abstand voneinander hergestellt und solche Sägeblätter (5) verwendet werden, daß sich die einzelnen Schnitte überlappen.

8. Verfahren nach einem der Ansprüche 1—7, dadurch gekennzeichnet, daß die Tiefe der Führungsbohrung (B) so bemessen wird, daß die erwünschte Schnittiefe mit Führung durch den Sägekörper und/oder das Führungsstück erreicht wird.

9. Verfahren nach einem der Ansprüche 1—8, dadurch gekennzeichnet, daß die Schneideinrichtung mit einem Ständer (3) gehaltert und geführt wird, der vor Schneidbeginn auf dem zu schneidenden Material so befestigt wird, daß der Vorschub des Schneidgerätes gegen die Oberfläche des zu schneidenden Materials gerichtet ist.

10. Verfahren nach einem der Ansprüche 1—9, dadurch gekennzeichnet, daß eine Führungsbohrung (B) mit einer Tiefe hergestellt wird, die der gewünschten Schnitt-Tiefe, vermindert um den Radius des Sägeblattes (5) ist, daß neben der Bohrung (B) ein Bohrständer (3) mit einer Vorschubeinheit (2) befestigt wird, daß an der Vorschubeinheit (2) oder einer damit verbundenen Aufnahme (6) eine Führungssäule (1) mit einem Sägekörper (4) befestigt wird, daß der Sägekörper (4) mit einem Ansatz (4a) verbunden wird, dessen Länge dem Radius des Sägeblattes entspricht, daß mit der soweit vervollständigten Einheit ein Schnitt hergestellt wird, indem der Ansatz (4a) in die Führungsbohrung (B) abgesenkt wird und daß nach Erreichen einer vorbestimmten Schnitt Tiefe die Führungssäule (1) in der Aufnahme (6) verstellt und vor Erreichen der Endschnittiefe der Ansatz abgenommen wird.

11. Vorrichtung zur Durchführung des Verfahrens nach einem der Ansprüche 1—10, dadurch gekennzeichnet, daß das Schneidgerät eine im Ständer (3) gehaltene und geführte Absenksäule (1) mit einem daran befestigten Sägekörper (4) aufweist, daß seitlich neben dem Sägekörper (4) ein vom Sägekörper (4) angetriebenes Sägeblatt (5) angeordnet ist, und daß die Absenksäule (1) und der Sägekörper (4) in einer parallel zur Sägeblattebene verlaufenden Richtung bewegbar sind.

12. Vorrichtung nach Anspruch 11, dadurch gekennzeichnet, daß der Ständer (3) ein eine Säule aufweisender Bohrständer mit einer Aufnahme (6) für die Absenksäule (1) ist.

13. Vorrichtung nach Anspruch 12, dadurch gekennzeichnet, daß die Führungssäule (1) durch eine Nut- und Federverbindung (15, 16) mit dem Sägekörper (4) verbindbar ist.

14. Vorrichtung nach Anspruch 12 oder 13, dadurch gekennzeichnet, daß der Sägekörper (4) ein Vierkantprofil hat, das durch Führungsstücke (8) an die kreisförmige Führungsbohrung (B) angepaßt ist.

15. Vorrichtung nach einem der Ansprüche 12, 13 oder 14, dadurch gekennzeichnet, daß der Führungskörper (4) mit einem Ansatz (4a) verbindbar ist, der an die Kreisform der Führungsbohrung angepaßt ist und für den Schneidbeginn in die Führungsbohrung (B) eingeführt wird.

16. Vorrichtung nach Anspruch 15, dadurch gekennzeichnet, daß der Führungs-Ansatz (4a) das gleiche Profil und die gleichen Ansätze (8) aufweist wie der Sägekörper (4).

17. Vorrichtung nach Anspruch 11, dadurch gekennzeichnet, daß die Absenk- oder Führungssäule (1) an einer Quertraverse (2a) befestigt ist, die durch Buchsen an ihren Enden auf parallel zur Absenksäule angeordneten Säulen 3a, 3b verschiebbar gelagert ist.

18. Vorrichtung nach Anspruch 17, dadurch gekennzeichnet, daß an der Quertraverse eine Vorschubeinrichtung vorgesehen ist.

**Revendications**

1. Procédé pour réaliser des entailles profondes dans le béton armé, le béton et la maçonnerie ou similaire, dans lequel un perçage de guidage est réalisé pour les organes de coupe, caractérisé par le fait que l'on utilise un appareil de coupe comprenant une lame de scie circulaire (5), et par le fait que le perçage de guidage (B) est ménagé avant l'opération de coupe et immédiatement à côté de l'entaille à réaliser, perçage dans lequel peut être abaissé le corps de scie (4) qui porte latéralement et qui entraîne la lame de scie lorsque l'entaille progresse.

2. Procédé selon la revendication 1, caractérisé par le fait que le perçage de guidage (B) présente un diamètre tel que le corps de scie (4) puisse glisser dans le perçage (B), ou ne s'y déplacer qu'avec un faible frottement.

3. Procédé selon la revendication 1 ou 2, caractérisé par le fait qu'au début de la coupe, on introduit dans le perçage (B), avant le corps de scie (4), un corps de guidage (4a) qui peut être relié au corps de scie (4).

4. Procédé selon l'une ou plusieurs des revendications 1 à 3, caractérisé par le fait que l'on réalise une entaille préalable au moyen d'une lame de scie de plus faible diamètre, et que l'on réalise ensuite une entaille suivante au moyen d'au moins une autre lame de scie.

5. Procédé selon la revendication 4, caractérisé par le fait que d'autres entailles sont réalisées sans guidage dans le perçage de guidage par des pièces de guidage supplémentaires (4a).

6. Procédé selon l'une des revendications 1 à 5, caractérisé par le fait que, pour obtenir des entailles profondes dont la longueur dépasse le diamètre des lames de scie (5), on réalise plusieurs perçages contigus à des distances telles que les entailles réalisées à partir des perçages (B) se complètent pour former une entaille longue.

7. Procédé selon la revendication 6, caractérisé par le fait que l'on réalise les perçages (B) à une distance entre eux telle, et que l'on utilise des lames de scie (5) telles que les diverses entailles se recoupent.

8. Procédé selon l'une des revendications 1 à 7, caractérisé par le fait que la profondeur du perçage de guidage (B) est calculée de telle manière que la profondeur souhaitée pour l'entaille soit atteinte avec le guidage par le corps de scie et/ou la pièce de guidage.

9. Procédé selon l'une des revendications 1 à 8, caractérisé par le fait que le dispositif de coupe est maintenu et guidé par un montant (3) qui est fixé avant le début de la coupe sur le matériau à couper, et ce, de telle manière que l'avance de l'outil de coupe soit dirigée vers la surface du matériau à couper.

10. Procédé selon l'une des revendications 1 à 9, caractérisé par le fait que l'on réalise un perçage de guidage (B) avec une profondeur qui est égale à la profondeur souhaitée pour l'entaille, diminuée du rayon de la lame de scie (5), par le fait qu'un montant (3) est fixé avec un ensemble d'avancement (2) à côté du perçage (B), par le fait qu'une colonne de guidage (1) est fixée avec un corps de scie (4) sur l'ensemble d'avancement (2) ou sur un logement (6) qui lui est relié, par le fait que le corps de scie (4) est relié à un prolongement (4a) dont la longueur correspond au rayon de la lame de scie, par le fait que l'on réalise une entaille avec l'ensemble ainsi complété, du fait que le prolongement (4a) est descendu dans le perçage de guidage (B), et par le fait qu'après avoir atteint une profondeur d'entaille prédéterminée, on déplace la colonne de guidage (1) dans le logement (6) et on enlève le prolongement avant d'avoir atteint la profondeur finale de l'entaille.

11. Dispositif pour la mise en oeuvre du procédé selon l'une des revendications 1 à 10, caractérisé par le fait que l'appareil de coupe comporte une colonne de descente (1) qui est maintenue et guidée dans le support (3) avec un corps de scie (4) qui y est fixé, par le fait qu'une lame de scie (5) entraînée par le corps de scie (4) est disposée latéralement à côté du corps de scie (4), et par le fait que la colonne de descente (1) et le corps de scie (4) peuvent être déplacés dans une direction qui s'étend parallèlement au plan de la lame de scie.

12. Dispositif selon la revendication 11, caractérisé par le fait que le support (3) est un montant qui comporte une colonne et qui comprend un logement (6) pour la colonne de descente (1).

13. Dispositif selon la revendication 12, caractérisé par le fait que la colonne de guidage (1) peut être reliée au corps de scie (4) grâce à une liaison par rainure et languette (15, 16).

14. Dispositif selon la revendication 12 ou 13, caractérisé par le fait que le corps de scie (4) présente un profil carré qui est adapté au perçage de guidage circulaire (B) grâce à des pièces de guidage (8).

15. Dispositif selon l'une des revendications 12, 13 ou 14, caractérisé par le fait que le corps de guidage (4) peut être relié à un prolongement (4a) qui est adpaté à la forme circulaire du perçage de guidage et qui est introduit dans le perçage de guidage (B) pour le début de la coupe.

16. Dispositif selon la revendication 15, caractérisé par le fait que le prolongement de guidage (4a) présente le même profil et les mêmes parties en saillie (8) que le corps de scie (4).

17. Dispositif selon la revendication 11, caractérisé par le fait que la colonne de descente ou de guidage (1) est fixée à une traverse (2a) qui est montée coulissante par des douilles à ses extrémités sur des colonnes (3a, 3b) disposées parallèlement à la colonne de descente.

18. Dispositif selon la revendication 17, caractérisé par le fait qu'un dispositif d'avancement est prévu sur la traverse.

**Claims**

1. Method of making deep cuts in reinforced concrete, concrete and masonry or the like, wherein a guide bore is produced for the cutting elements, characterised in that a cutting device with a circular saw blade (5) is used, and that, prior to the cutting process and directly next to the cut to be produced, the guide bore is sunk into which the saw body (4), which laterally carries and drives the saw blade, can be lowered as cutting progresses.

2. Method according to claim 1, characterised in that the guide bore (B) is provided with a diameter which permits the saw body (4) to slide or move with minimal friction in the bore (B).

3. Method according to claim 1 or 2, characterised in that as cutting commences a guide element (4a) connectible to the saw body (4) is introduced into the bore (B) in front of the saw body (4).

4. Method according to one or more of claims 1 to 3, characterised in that a preliminary cut is effected with a smaller-diameter saw blade and then a subsequent cut is effected using at least one other saw blade.

5. Method according to claim 4, characterised in that further cuts are effected without guidance in the guide bore by additional guide elements (4a).

6. Method according to one of claims 1 to 5, characterised in that, to make deep cuts which are longer than the diameter of the saw blades (5), a plurality of bores are produced next to one another and spaced in such a way that the cuts made from the bores (B) combine to form one long cut.

7. Method according to claim 6, characterised in that the bores (B) are so spaced apart from one another and saw blades (5) of such a type are used that the individual cuts overlap.

8. Method according to one of claims 1 to 7, characterised in that the depth of the guide bore (B) is so dimensioned that the required cutting depth is achieved through guidance by the saw body and/or the guide element.

9. Method according to one of claims 1 to 8, characterised in that the cutting device is supported and guided by a stand (3) which, prior to cutting, is fastened onto the material to be cut in such a way that the feed of the cutting device is directed towards the surface of the material to be cut.

10. Method according to one of claims 1 to 9, characterised in that a guide bore (B) is produced with a depth which corresponds to the required cutting depth less the radius of the saw blade (5), that an upright (3) with a feed unit (2) is fastened next to the bore (B), that a guide column (1) with a saw body (4) is fastened on the feed unit (2) or on a receptacle (6) connected thereto, that the saw body (4) is connected to a shoulder (4a) whose length corresponds to the radius of the saw blade, that the unit so far completed is used to make a cut in that the shoulder (4a) is lowered into the guide bore (B), and that on reaching a specified depth of cut the guide column (1) in the receptacle (6) is moved and prior to reaching the final depth of cut the shoulder is removed.

11. Device for effecting the method according to one of claims 1 to 10, characterised in that the cutting device has a sinking column (1) which is held and guided in the stand (3) and has a saw body (4) fastened thereon, that a saw blade (5) driven by the saw body (4) is disposed laterally next to the saw body (4), and that the sinking column (1) and the saw body (4) are movable in a direction extending parallel to the saw blade plane.

12. Device according to claim 11, characterised in that the stand (3) is an upright having a column and a receptacle (6) for the sinking column (1).

13. Device according to claim 12, characterised in that the guide column (1) is connectible by a tongue and groove connection (15, 16) to the saw body (4).

14. Device according to claim 12 or 13, characterised in that the saw body (4) has a square profile which is adapted by means of guide elements (8) to the circular guide bore (B).

15. Device according to one of claims 12, 13 or 14, characterised in that the guide body (4) is connectible to a shoulder (4a) which is adapted to the circular shape of the guide bore and is introduced into the guide bore (B) for beginning cutting.

16. Device according to claim 15, characterised in that the guide shoulder (4a) has the same profile and the same projections (8) as the saw body (4).

17. Device according to claim 11, characterised in that the sinking or guide column (1) is fastened on a crosshead (2a) which is displaceably supported by means of bearing bushes at its ends on columns 3a, 3b disposed parallel to the sinking column.

18. Device according to claim 17, characterised in that a feed device is provided on the crosshead.

Wasserzufuhr

Fig. 1

Fig. 2

Fig. 3

Fig. 4